# EUROPEAN PATENT APPLICATION

(11) **EP 4 844 358 A1**
(43) Date of publication of application: **25.11.2026**
(21) Application number: 26178908.5
(22) Date of filing: 15.05.2026
(51) Int. Cl.: G01L 19/06, G01L 19/00, G01L 19/04

(54) **MECHANICAL PRESSURE GAUGE MOUNT**

(30) Priority: 19.05.2025 US 202563808531 P; 11.05.2026 US 202619673077
(71) Applicant: Anderson Instrument Co. LLC, Fultonville, NY 12072 (US)
(72) Inventor: BOND, Richard J., Fultonville, NY 12072 (US)
(74) Representative: HGF

(57) **Abstract**

Systems, apparatuses, and methods described in some implementations herein provide for technology to convey a pressure transmission medium along a thermal path conduit to a mechanical pressure gauge, where the thermal path conduit has a winding pipe portion that includes one or more curved sections. Process media is isolated from a pressure transmission medium using an isolation membrane at a process connection fitting. Pressure is transmitted from the process media through the isolation membrane to the pressure transmission medium. The pressure transmission medium is conveyed along a thermal path conduit to a mechanical pressure gauge, where the thermal path conduit has a winding pipe portion that includes one or more curved sections. Pressure is indicated via the mechanical pressure gauge.

## Description

### FIELD

The instant disclosure relates generally to systems, apparatuses, and methods for mechanical pressure gauge mounts. In particular, embodiments of the instant disclosure relate to systems, apparatuses, and methods for mechanical pressure gauge mounts that utilize a length of thermal path.

### BACKGROUND

In the field of hygienic sensors, mechanical pressure measurement is often used on high temperature media systems. A challenge of mechanical pressure measurement is that contamination can form over time in the gauge and degrade measurement accuracy along with increase in the risk of process media contamination.

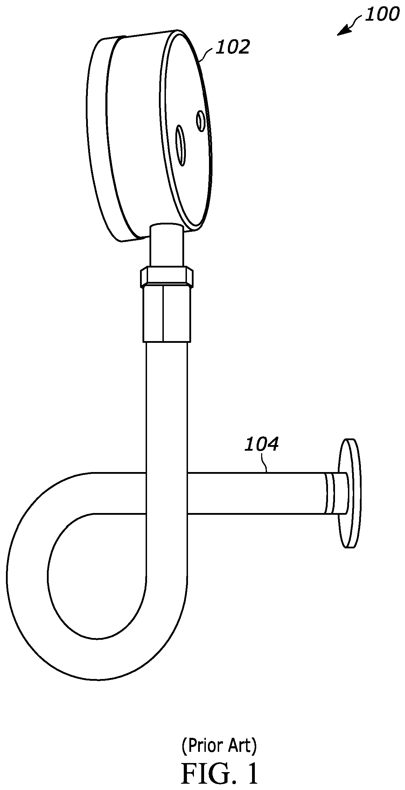

Referring to FIG. 1, a non-hygienic sensor 100 is illustrated including a mechanical gauge 102 and a pig tail siphon tube 104. In the past, for steam applications, the mechanical gauge 102 would be used in conjunction with the pig tail siphon tube 104. The pig tail siphon tube 104 acts as a steam trap or "heat choke" where condensate accumulates in the low point of the pig tail tube 104. The pig tail siphon tube 104 of non-hygienic sensor 100 is open to process stream that directly apply pressure to the internal mechanical components of the mechanical gauge 102.

### BRIEF DESCRIPTION OF THE DRAWINGS

The foregoing and other features and advantages will be discussed in detail in the following non-limiting description of specific embodiments in connection with the accompanying drawings, in which:
FIG. 1 illustrates a perspective view of a non-hygienic sensor according to existing implementations;
FIG. 2 illustrates a front view of a mechanical pressure gauge system according to an example of the instant disclosure;
FIG. 3 illustrates a side view of the mechanical pressure gauge system according to an example of the instant disclosure;
FIG. 4 illustrates a cross sectional view of a mechanical pressure gauge mount according to an example of the instant disclosure; and
FIG. 5 is an illustration of a flowchart of an example method for conveying a pressure transmission medium along a thermal path conduit according to an example of the instant disclosure.

### DETAILED DESCRIPTION

As described above, in existing products, the pig tail siphon tube acts as a steam trap or "heat choke" where condensate accumulates in the low point of the pig tail. The challenge that this brings is that the condensate is trapped in the low point and if contaminated by the equipment then it can be a source of contamination for the entire system. There is also a potential added accuracy error due to the condensate in the pigtail. Additionally, the gauge has a risk of high temperature damage on the system start up due to the lack of formed condensate in the pigtail allowing the temperature of the steam to impact the gauge almost instantly.

Advantageously, some implementations discussed herein provide for a hygienic mechanical steam pressure gauge that uses a length of thermal path instead of a heat choke. Various embodiments maintain a hygienic boundary and allow for cleaning and sanitizing to ensure that the process it monitors remains hygienic and does not harm process media. Advantageously, isolation from the measurement point temperature extremes maintains accuracy over those extremes and minimizes the risk of the gauge itself. Isolation of the internal mechanical components from the process media minimizes the risk of cross contamination.

By utilizing the implementations described herein for mechanical pressure measurement, which rely on a length of thermal path instead of a heat choke, the actual measurement can be achieved more accurately, and the measurement point is not highly at risk of impact by temperature and contamination that could form over time in the gauge impacting the application of the gauge.

As will be described in greater detail below, in some implementations discussed herein, systems, apparatuses, and methods provide for a mechanical pressure gauge mount. The mechanical pressure gauge mount includes a process connection fitting, an isolation membrane, and a thermal path conduit. The process connection fitting is coupled with a pipe that conveys process media. The isolation membrane is coupled to the process connection fitting to separate the process media in the pipe from a pressure transmission medium. The thermal path conduit is in fluid communication with the isolation membrane to convey the pressure transmission medium along an extended length to a mechanical pressure gauge. The thermal path conduit has a winding pipe portion that includes one or more curved sections.

Systems, apparatuses, and methods described in some implementations herein provide for technology to convey a pressure transmission medium along a thermal path conduit to a mechanical pressure gauge, where the thermal path conduit has a winding pipe portion that includes one or more curved sections. Process media is isolated from a pressure transmission medium using an isolation membrane at a process connection fitting. Pressure is transmitted from the process media through the isolation membrane to the pressure transmission medium. The pressure transmission medium is conveyed along a thermal path conduit to a mechanical pressure gauge, where the thermal path conduit has a winding pipe portion that includes one or more curved sections. Pressure is indicated via the mechanical pressure gauge.

In one example, a mechanical pressure gauge system comprises a process connection fitting, an isolation membrane, a thermal path conduit, a gauge connection fitting, and a mechanical pressure gauge. The process connection fitting is coupled with a pipe that conveys process media. The isolation membrane is coupled to the process connection fitting to separate the process media in the pipe from a pressure transmission medium. The thermal path conduit is in fluid communication with the isolation membrane to convey the pressure transmission medium along an extended length. The thermal path conduit has a winding pipe portion that includes one or more curved sections. The gauge connection fitting is in fluid communication with the thermal path conduit. The gauge connection fitting is coupled to the mechanical pressure gauge to the mechanical pressure gauge mount. The mechanical pressure gauge is coupled to the gauge connection fitting and fluidly coupled to the thermal path conduit such that pressure of the process media is transmitted to the mechanical pressure gauge through the isolation membrane and the pressure transmission medium.

In one aspect, a hygienic mechanical steam pressure gauge assembly includes a hygienic process connection having an isolation membrane that separates process media from a pressure transmission medium, and a thermal path providing an extended heat-loss distance for the pressure transmission medium between the process connection and a mechanical gauge. In contrast to a siphon or pigtail that forms and retains a condensate heat choke, the thermal path reduces exposure of retained condensate, improves cleanability, and reduces thermal shock to the gauge during startup.

In certain implementations, the thermal path is formed as a helical passage (or other thermal path shape) that may be at least partially encased in a structural member that maintains spacing from the process connection while reducing exposed hot surface area. Such a configuration provides a compact footprint, reduces burn risk, and preserves measurement accuracy across temperature extremes.

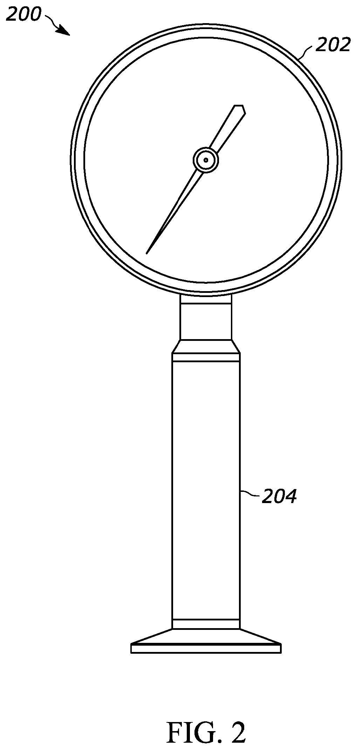

FIG. 2 illustrates a front view of a mechanical pressure gauge system 200 according to an example of the instant disclosure. As illustrated, the mechanical pressure gauge system 200 comprises a mechanical pressure gauge mount 204 coupled to a mechanical pressure gauge 202.

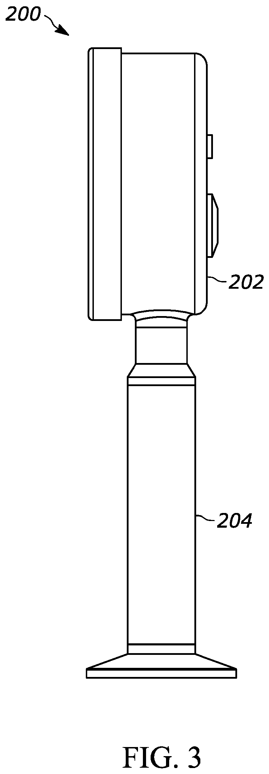

FIG. 3 illustrates a side view of the mechanical pressure gauge system 200 according to an example of the instant disclosure.

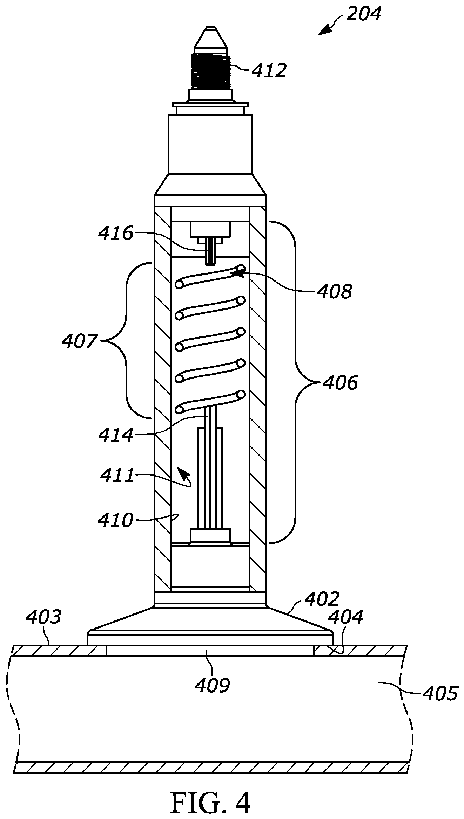

FIG. 4 illustrates a cross-sectional view of the mechanical pressure gauge mount 204 according to an example of the instant disclosure. As illustrated, the mechanical pressure gauge mount 204 comprises a process connection fitting 402, an isolation membrane 404, a thermal path conduit 406, and a gauge connection fitting 412.

The process connection fitting 402 is coupled with a pipe 403 that conveys process media 405.

The isolation membrane 404 is coupled to the process connection fitting 402 to separate the process media 405 in the pipe 403 from a pressure transmission medium 408 in the thermal path conduit 406. For example, isolation membrane 404 is in fluid contact with process media 405 via an opening 409 in pipe 403.

The isolation membrane 404 comprises a diaphragm sealed to the process connection fitting 402 to define a hygienic boundary from the process media 405. The diaphragm comprises a metallic material, a plastic material, a rubber material, the like, and/or combinations thereof.

The thermal path conduit 406 is in fluid communication with the isolation membrane 404 to convey the pressure transmission medium 408 along an extended length. The thermal path conduit 406 contains a pressure transmission medium 408 of propylene glycol, silicone oil, glycerin, mineral oil, or the like.

The thermal path conduit 406 has a winding pipe portion 407 that includes one or more curved sections. The winding pipe portion 407 has a shape selected from one or more of a helical shape, a serpentine shape, an irregular curved shape, the like, and/or combinations thereof. For example, any shape that adds progressive length and distance may be utilized. For example, the winding pipe portion 407 may have any non-linear routing that increases a flow-path length of the pressure transmission medium between an inlet end and an outlet end of the winding pipe portion. The winding pipe portion 407 may have any geometry in which a flow-path length between an inlet end and an outlet end is greater than a straight-line distance between the inlet end and the outlet end. The winding pipe portion 407 may include one or more bends, turns, or curves arranged to increase a flow-path length of the pressure transmission medium between an inlet end and an outlet end. The winding pipe portion 407 may have any geometry that provides a non-linear flow path between the isolation membrane and the gauge connection fitting, thereby increasing a flow-path length relative to a straight conduit segment spanning the same endpoints.

The gauge connection fitting 412 is in fluid communication with the thermal path conduit 406. The gauge connection fitting 412 is configured to couple the mechanical pressure gauge (see, e.g., mechanical pressure gauge 202 in FIG. 2) to the mechanical pressure gauge mount 204. The mechanical pressure gauge (see, e.g., mechanical pressure gauge 202 in FIG. 2) is coupled to the gauge connection fitting 412 and fluidly coupled to the thermal path conduit 406 such that pressure of the process media 405 is transmitted to the mechanical pressure gauge through the isolation membrane 404 and the pressure transmission medium 408.

As illustrated, the mechanical pressure gauge mount 204 further comprises a hollow structural member 410. The hollow structural member 410 is located around at least a portion of the thermal path conduit 406. In some implementations, the hollow structural member 410 has a cylindrical shape, although other shapes (e.g., hexagonal or the like) may be utilized.

In some implementations, the hollow structural member 410 contains a heat transfer medium 411 around the thermal path conduit 406. In some implementations, the heat transfer medium 411 comprises air, water, the like, and/or combinations thereof.

As illustrated, the thermal path conduit 406 further comprises a lower adapter pipe portion 414 and an upper adapter pipe portion 416. The lower adapter pipe portion 414 is coupled in fluid communication between the isolation membrane 404 and the winding pipe portion 407. The lower adapter pipe portion 414 has a straight orientation in some implementations, although other orientations such as a slanted or curved orientation may be utilized. The upper adapter pipe portion 416 is coupled in fluid communication between the winding pipe portion 407 and the gauge connection fitting 412. The upper adapter pipe portion 416 has a straight orientation in some implementations, although other orientations such as a slanted or curved orientation may be utilized.

The gauge connection fitting 412 is adapted to couple to a gauge (see, e.g., mechanical pressure gauge 202 in FIG. 2). In some implementations, gauge connection fitting 412 may include a threaded connection or other coupling mechanism adapted to couple the gauge connection fitting 412 to the gauge. Additionally, or alternatively, gauge connection fitting 412 may be welded to the gauge, glued to the gauge, and/or press fit to the gauge.

In operation, some implementations herein provide a hygienic mechanical steam pressure gauge that uses a length of thermal path conduit 406 instead of a heat choke. Various embodiments maintain a hygienic boundary and allow for cleaning and sanitizing to ensure that the process the hygienic mechanical steam pressure gauge monitors remains hygienic and does not harm process media. Advantageously, isolation from the measurement point temperature extremes maintains accuracy over those extremes and minimizes the risk of the gauge itself. Isolation of the internal mechanical components from the process media minimizes the risk of cross contamination.

A first physical isolation point is the process connection fitting 402 with integral isolation membrane 404 that meets the requirements that are in place for hygienic process applications to ensure it can be hygienically cleaned and is a barrier to prevent cross contamination of the of the process media and gauge components. Accordingly, as will be described in greater detail below, the mechanical pressure gauge mount 204 has two functions, the first is for media isolation to maintain a hygienic boundary and the second is heat isolation through distance.

A second isolation point is through the length of the thermal path conduit 406 winding pipe portion 407 through that of which the gauge pressure transmission fluid travels to actuate the gauge. Extending the length of the thermal path conduit 406 allows the fluid to lose heat over that extended helical distance to minimize the internal heating of the gauge, lowering the impact on the accuracy and life of the gauge. While depicted as helical, it will be appreciated that in other embodiments the length of the thermal path conduit 406 winding pipe portion 407 may be any other suitable shape or configuration.

A third isolation point is the hollow structural member 410 that maintains the overall distance to work in conjunction with the thermal path conduit 406 winding pipe portion 407.

This thermal solution methodology achieves the same or better performance for accuracy of measurements, thermal impact on performance, and hygienic clean ability than through the utilization of a liquid condensate heat choke.

Advantageously, by encasing the thermal path conduit 406 in the hollow structural member 410, the hygienic mechanical steam pressure gauge has less exposed surfaces area that can be in human contact, lessening the risk of severe burns. Reducing exposed surface area also allows for a smaller footprint that can be used in more confined area applications. By utilizing implementations described herein for mechanical pressure measurement, which rely on a length of thermal path instead of a heat choke, the actual measurement can be achieved more accurately, and the measurement point is not highly at risk of impact by temperature and contamination that may form over time in the gauge impacting the application of the gauge.

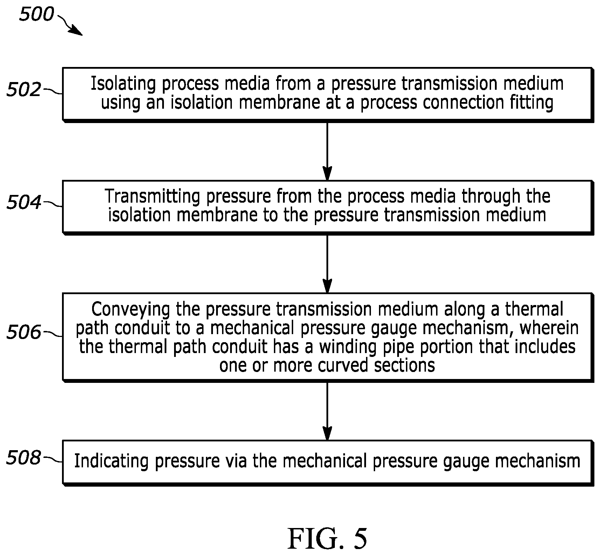

FIG. 5 is a flowchart of an example of a method 500 for conveying a pressure transmission medium along a thermal path conduit according to an example. The method 500 may generally be implemented in an apparatus, such as, for example, the mechanical pressure gauge mount 204 (FIG. 4), already discussed.

Illustrated processing block 502 provides for isolating process media from a pressure transmission medium. For example, process media is isolated from a pressure transmission medium using an isolation membrane at a process connection fitting.

Illustrated processing block 504 provides for transmitting pressure from the process media through the isolation membrane. For example, pressure is transmitted from the process media through the isolation membrane to the pressure transmission medium.

Illustrated processing block 506 provides for conveying the pressure transmission medium along a thermal path conduit to a mechanical pressure gauge. For example, the thermal path conduit has a winding pipe portion that includes one or more curved sections. In some implementations, the winding pipe portion has a shape selected from one or more of a helical shape, a serpentine shape, an irregular curved shape, the like, and/or combinations thereof.

Illustrated processing block 508 provides for indicating pressure. For example, pressure may be indicated via the mechanical pressure gauge.

In operation, method 500 may further include operations to dissipate heat from the thermal path conduit via a heat transfer medium surrounding at least a portion of the thermal path conduit. In such an example, a hollow structural member may be located around at least a portion of the thermal path conduit to contain the heat transfer medium.

### Additional Notes and Examples:

Clause 1 is a mechanical pressure gauge mount, comprising: a process connection fitting to couple with a pipe that conveys process media; an isolation membrane coupled to the process connection fitting to separate the process media in the pipe from a pressure transmission medium; and a thermal path conduit in fluid communication with the isolation membrane to convey the pressure transmission medium along an extended length to a mechanical pressure gauge, wherein the thermal path conduit has a winding pipe portion that includes one or more curved sections.
Clause 2 includes the mechanical pressure gauge mount of Clause 1, further comprising: a hollow structural member located around at least a portion of the thermal path conduit; and a gauge connection fitting in fluid communication with the thermal path, the gauge connection fitting to couple a mechanical pressure gauge to the mechanical pressure gauge mount.
Clause 3 includes the mechanical pressure gauge mount of Clause 2, wherein the thermal path conduit further comprises: a lower adapter pipe portion coupled in fluid communication between the isolation membrane and the winding pipe portion, wherein the lower adapter pipe portion has a straight orientation; and an upper adapter pipe portion coupled in fluid communication between the winding pipe portion and the gauge connection fitting, wherein the upper adapter pipe portion has a straight orientation.
Clause 4 includes the mechanical pressure gauge mount of Clause 2, wherein the hollow structural member contains a heat transfer medium around the thermal path conduit, and wherein the thermal path conduit contains propylene glycol, silicone oil, glycerin, or mineral oil.
Clause 5 includes the mechanical pressure gauge mount of any one of Clauses 1 to 4, wherein the winding pipe portion has a shape selected from one or more of a helical shape, a serpentine shape, or an irregular curved shape.
Clause 6 includes the mechanical pressure gauge mount of any one of Clauses 1 to 5, wherein the isolation membrane comprises a diaphragm sealed to the process connection fitting to define a hygienic boundary from the process media, wherein the diaphragm comprises a metallic material, a plastic material, or a rubber material.
Clause 7 includes the mechanical pressure gauge mount of any one of Clauses 1 to 6, wherein the mechanical pressure gauge mount is configured such that the process media is prevented from contacting internal mechanical components of the mechanical pressure gauge.
Clause 8 is a method comprising: isolating process media from a pressure transmission medium using an isolation membrane at a process connection fitting; transmitting pressure from the process media through the isolation membrane to the pressure transmission medium; conveying the pressure transmission medium along a thermal path conduit to a mechanical pressure gauge, wherein the thermal path conduit has a winding pipe portion that includes one or more curved sections; and indicating pressure via the mechanical pressure gauge.
Clause 9 includes the method of Clause 8, wherein the winding pipe portion has a shape selected from one or more of a helical shape, a serpentine shape, or an irregular curved shape.
Clause 10 includes the method of any one of Clauses 8 to 9, further comprising: dissipating heat from the thermal path conduit via a heat transfer medium surrounding at least a portion of the thermal path conduit; wherein a hollow structural member located around at least a portion of the thermal path conduit contains the heat transfer medium.
Clause 11 is a mechanical pressure gauge system, comprising: a process connection fitting to couple with a pipe that conveys process media; an isolation membrane coupled to the process connection fitting to separate the process media in the pipe from a pressure transmission medium; a thermal path conduit in fluid communication with the isolation membrane to convey the pressure transmission medium along an extended length, wherein the thermal path conduit has a winding pipe portion that includes one or more curved sections; a gauge connection fitting in fluid communication with the thermal path conduit, the gauge connection fitting to couple a mechanical pressure gauge to the mechanical pressure gauge mount; and a mechanical pressure gauge coupled to the gauge connection fitting and fluidly coupled to the thermal path conduit such that pressure of the process media is transmitted to the mechanical pressure gauge through the isolation membrane and the pressure transmission medium.
Clause 12 includes the mechanical pressure gauge system of Clause 11, further comprising: a hollow structural member located around at least a portion of the thermal path conduit.
Clause 13 includes the mechanical pressure gauge system of Clause 12, wherein the hollow structural member has a cylindrical shape.
Clause 14 includes the mechanical pressure gauge system of Clause 12, wherein the thermal path conduit further comprises: a lower adapter pipe portion coupled in fluid communication between the isolation membrane and the winding pipe portion, wherein the lower adapter pipe portion has a straight orientation; and an upper adapter pipe portion coupled in fluid communication between the winding pipe portion and the gauge connection fitting, wherein the upper adapter pipe portion has a straight orientation.
Clause 15 includes the mechanical pressure gauge system of Clause 12, wherein the hollow structural member contains a heat transfer medium around the thermal path conduit, and wherein the thermal path conduit contains propylene glycol, silicone oil, glycerin, or mineral oil.
Clause 16 includes the mechanical pressure gauge system of any one of Clauses 11 to 15, wherein the winding pipe portion has a shape selected from one or more of a helical shape, a serpentine shape, or an irregular curved shape.
Clause 17 includes the mechanical pressure gauge system of any one of Clauses 11 to 16, wherein the isolation membrane comprises a diaphragm sealed to the process connection fitting to define a hygienic boundary from the process media, wherein the diaphragm comprises a metallic material, a plastic material, or a rubber material.
Clause 18 includes an apparatus including means for performing the function of any preceding Clause.

All definitions, as defined and used herein, should be understood to control over dictionary definitions, definitions in documents incorporated by reference, and/or ordinary meanings of the defined terms.

Furthermore, for ease of understanding, certain functional blocks can have been delineated as separate blocks; however, these separately delineated blocks should not necessarily be construed as being in the order in which they are discussed or otherwise presented herein. For example, some blocks can be able to be performed in an alternative ordering, simultaneously, etc.

As used herein, phrases substantially similar to "at least one of A, B or C" are intended to be interpreted in the disjunctive, i.e., to require A or B or C or any combination thereof unless stated or implied by context otherwise. Further, phrases substantially similar to "at least one of A, B and C" are intended to be interpreted in the conjunctive, i.e., to require at least one of A, at least one of B and at least one of C unless stated or implied by context otherwise. Further still, the term "substantially" or similar words requiring subjective comparison are intended to mean "within manufacturing tolerances" unless stated or implied by context otherwise.

As used herein, the terms "coupled," "attached," "connected," or "operatively connected" can be used herein to refer to any type of relationship, direct or indirect, between the components in question. For example, the terms "coupled," "attached," "connected," or "operatively connected" may refer to at least a functional relationship between two elements and may encompass configurations in which the two elements are directed connected to each other, i.e., without any intervening elements, or indirectly connected to each other, i.e., with intervening elements. Additionally, the terms "first," "second," etc. are used herein only to facilitate discussion, and carry no particular temporal or chronological significance unless otherwise indicated. The terms "cause" or "causing" means to make, force, compel, direct, command, instruct, and/or enable an event or action to occur or at least be in a state where such event or action can occur, either in a direct or indirect manner.

Although a number of illustrative examples are described herein, it should be understood that numerous other modifications and examples can be devised by those skilled in the art that will fall within the spirit and scope of the principles of the foregoing disclosure . More particularly, reasonable variations and modifications are possible in the component parts and/or arrangements of the subject combination arrangement within the scope of the foregoing disclosure, the drawings and the appended claims without departing from the spirit of the foregoing disclosure. In addition to variations and modifications in the component parts and/or arrangements, alternative uses will also be apparent to those skilled in the art. The examples can be combined to form additional examples.

## Claims

1. A mechanical pressure gauge mount, comprising:
a process connection fitting to couple with a pipe that conveys process media;
an isolation membrane coupled to the process connection fitting to separate the process media in the pipe from a pressure transmission medium; and
a thermal path conduit in fluid communication with the isolation membrane to convey the pressure transmission medium along an extended length to a mechanical pressure gauge, wherein the thermal path conduit has a winding pipe portion that includes one or more curved sections.

2. The mechanical pressure gauge mount of claim 1, further comprising:
a hollow structural member located around at least a portion of the thermal path conduit; and
a gauge connection fitting in fluid communication with the thermal path conduit, the gauge connection fitting to couple a mechanical pressure gauge to the mechanical pressure gauge mount.

3. The mechanical pressure gauge mount of claim 2, wherein the thermal path conduit further comprises:
a lower adapter pipe portion coupled in fluid communication between the isolation membrane and the winding pipe portion, wherein the lower adapter pipe portion has a straight orientation; and
an upper adapter pipe portion coupled in fluid communication between the winding pipe portion and the gauge connection fitting, wherein the upper adapter pipe portion has a straight orientation.

4. The mechanical pressure gauge mount of claim 2, wherein the hollow structural member contains a heat transfer medium around the thermal path conduit, and wherein the thermal path conduit contains propylene glycol, silicone oil, glycerin, or mineral oil.

5. The mechanical pressure gauge mount of claim 1, wherein the winding pipe portion has a shape selected from one or more of a helical shape, a serpentine shape, or an irregular curved shape.

6. The mechanical pressure gauge mount of claim 1, wherein the isolation membrane comprises a diaphragm sealed to the process connection fitting to define a hygienic boundary from the process media, wherein the diaphragm comprises a metallic material, a plastic material, or a rubber material.

7. The mechanical pressure gauge mount of claim 1, wherein the mechanical pressure gauge mount is configured such that the process media is prevented from contacting internal mechanical components of the mechanical pressure gauge.

8. A method comprising:
isolating process media from a pressure transmission medium using an isolation membrane at a process connection fitting;
transmitting pressure from the process media through the isolation membrane to the pressure transmission medium;
conveying the pressure transmission medium along a thermal path conduit to a mechanical pressure gauge, wherein the thermal path conduit has a winding pipe portion that includes one or more curved sections; and
indicating pressure via the mechanical pressure gauge, and optionally wherein:
the winding pipe portion has a shape selected from one or more of a helical shape, a serpentine shape, or an irregular curved shape; or wherein
the method further comprises:
dissipating heat from the thermal path conduit via a heat transfer medium surrounding at least a portion of the thermal path conduit; wherein a hollow structural member located around at least a portion of the thermal path conduit contains the heat transfer medium.

9. A mechanical pressure gauge system, comprising:
a mechanical pressure gauge mount, comprising:
a process connection fitting to couple with a pipe that conveys process media;
an isolation membrane coupled to the process connection fitting to separate the process media in the pipe from a pressure transmission medium;
a thermal path conduit in fluid communication with the isolation membrane to convey the pressure transmission medium along an extended length, wherein the thermal path conduit has a winding pipe portion that includes one or more curved sections; and
a gauge connection fitting in fluid communication with the thermal path conduit; and
a mechanical pressure gauge coupled to the gauge connection fitting and fluidly coupled to the thermal path conduit such that pressure of the process media is transmitted to the mechanical pressure gauge through the isolation membrane and the pressure transmission medium.

10. The mechanical pressure gauge system of claim 9, further comprising:
a hollow structural member located around at least a portion of the thermal path conduit.

11. The mechanical pressure gauge system of claim 10, wherein the hollow structural member has a cylindrical shape.

12. The mechanical pressure gauge system of claim 10, wherein the thermal path conduit further comprises:
a lower adapter pipe portion coupled in fluid communication between the isolation membrane and the winding pipe portion, wherein the lower adapter pipe portion has a straight orientation; and
an upper adapter pipe portion coupled in fluid communication between the winding pipe portion and the gauge connection fitting, wherein the upper adapter pipe portion has a straight orientation.

13. The mechanical pressure gauge system of claim 10, wherein the hollow structural member contains a heat transfer medium around the thermal path conduit, and wherein the thermal path conduit contains propylene glycol, silicone oil, glycerin, or mineral oil.

14. The mechanical pressure gauge system of claim 9, wherein the winding pipe portion has a shape selected from one or more of a helical shape, a serpentine shape, or an irregular curved shape.

15. The mechanical pressure gauge system of claim 9, wherein the isolation membrane comprises a diaphragm sealed to the process connection fitting to define a hygienic boundary from the process media, wherein the diaphragm comprises a metallic material, a plastic material, or a rubber material.
